# EUROPÄISCHE PATENTSCHRIFT

(11) **EP 2 866 968 B1**
(45) Veröffentlichungstag und Bekanntmachung des Hinweises auf die Patenterteilung: **18.11.2015**
(21) Anmeldenummer: 14722625.2
(22) Anmeldetag: 29.04.2014
(51) Int. Cl.: B23K 20/02, B23K 20/16, B23K 20/227

(54) **VERFAHREN UND ANORDNUNG ZUM HERSTELLEN EINES RÄUMLICHEN WERKSTOFFVERBUNDS UNTER VERWENDUNG EINES EXPANSIONSKÖRPERS**
METHOD AND ARRANGEMENT FOR PRODUCING A THREE-DIMENSIONAL MATERIAL COMPOSITE USING AN EXPANSION BODY
PROCÉDÉ ET DISPOSITIF DE FABRICATION D'UN MATÉRIAU COMPOSITE TRIDIMENSIONNEL AU MOYEN D'UN CORPS D'EXPANSION

(30) Priorität: 04.06.2013 DE 102013105762
(43) Veröffentlichungstag der Anmeldung: 06.05.2015
(73) Patentinhaber: Betz, Gerhard, Dr., 45478 Mülheim/Ruhr (DE)
(72) Erfinder: Betz, Gerhard, Dr., 45478 Mülheim/Ruhr (DE)
(74) Vertreter: Zenz Patentanwälte Partnerschaft mbB
(86) Internationale Anmeldenummer: PCT/EP2014/058747
(87) Internationale Veröffentlichungsnummer: WO 2014/195065

(56) Entgegenhaltungen:
- EP-A1- 0 535 935
- US-A- 4 049 184

## Beschreibung

Die Erfindung betrifft ein Verfahren zum Herstellen eines räumlichen Werkstoffverbunds aus wenigstens zwei Metallkörpern, wobei zunächst die Metallkörper derart zusammengesetzt werden, dass zu verbindende Oberflächenbereiche lose aneinander anliegen, und dann dieser Verbund auf eine Zieltemperatur erwärmt wird und dabei diese Oberflächenbereiche spaltfrei aneinandergedrückt werden, wobei eine form- und/oder stoffschlüssige Verbindung zwischen den Oberflächenbereichen der Metallkörper hergestellt wird. Ferner betrifft die Erfindung eine Anordnung zum Herstellen eines räumlichen Werkstoffverbunds aus wenigstens zwei Metallkörpern sowie einen Expansionskörper zur Verwendung in einem solchen Verfahren.

Ein derartiges Verfahren, bei dem eine form- und/oder stoffschlüssige Verbindung zwischen Metallkörpern beispielsweise durch einen bei hohem Druck und hohen Temperaturen stattfindenden Metalldiffusionsvorgang hergestellt wird, ist aus der DE 102 29 994 C1 bekannt.

Aus der EP 0 535 935 A1 ist es bekannt, einen Verbund verschiedener Materialien (Titanlegierungen und Siliciumcarbid) durch einen Diffusionsvorgang bei hohem Druck (hot isostatic pressing) miteinander zu verbinden. Aus der US 4,049,184 ist es bekannt, einen Verbund ineinandergeschobener Rohrhülsen bei hohen Drücken und hoher Temperatur durch Metalldiffusion miteinander zu verbinden. Dabei wird in den erhitzten, beidseitig verschlossenen Rohrinnenraum ein Fluid unter Druck eingespritzt, wobei der sich erhöhende Druck im Rohrinnenraum zu einer Expansion des Rohrverbund führt, bei dem die Außenwand des Rohrverbunds gegen eine diese umgebende Form gepresst wird, wobei dehnungsbedingte feine Strukturdefekte als zusätzliche Diffusionskanäle wirken, was den Verbund verbessert.

Unter einem "räumlichen" Werkstoffverbund aus wenigstens zwei Metallkörpern soll hier ein solcher verstanden werden, bei dem die zu verbindenden Oberflächenbereiche nicht ausschließlich in einer Ebene liegen und somit das Aneinanderdrücken der zu verbindenden Oberflächenbereiche nicht ausschließlich mittels einer zur Ebene senkrechten Kraft bewirkt werden kann.

Für räumliche Werkstoffverbundsysteme gibt es viele Anwendungsbereiche in der Chemieindustrie, dem Maschinenbau und dem Werkzeugbau, bei denen Rohrleitungen, Aggregate, Maschinenteile, Werkzeuge oder Bauteile an bestimmten Oberflächen der Außenkontur oder an Oberflächen innerer Hohlräume Plattierungen, d.h. dicke Beschichtungen aus einem vom unterliegenden Grundmaterial abweichenden Plattierungsmaterial aufweisen, die zur Schaffung vorgegebener abrasiver, chemischer oder mechanischer Eigenschaften des Schichtaufbaus dienen. Beispielsweise werden Rohre oder Pumpengehäuse mit einer Innenplattierung oder Wellen mit einer Außenplattierung versehen.

Zur Herstellung solcher Plattierungen gibt es verschiedene Verfahren. Bei innenliegenden Funktionsflächen, wie Wandungen von Bohrungen, behilft man sich dadurch, dass Hülsen des Plattierungsmaterials in Rohre oder Bohrungen eingeschoben und an den Enden dicht verschweißt werden. Diese Vorgehensweise ist in vielerlei Hinsicht unbefriedigend. Der vorhandene Spalt verhindert einen guten Wärmedurchgang und führt bei hoher mechanischer Belastung der Hülse rasch zu deren Zerstörung, da es an einer Abstützung durch den Grundkörper fehlt. Gibt es in dem Aggregat quer verlaufende Verbindungskanäle, so lässt sich das Hülsenprinzip überhaupt nicht verwenden, da eine Abdichtung im Inneren kaum möglich ist.

Auf dem Gebiet der Innenplattierung von Rohren wurden unterschiedliche Herstellungsverfahren entwickelt, wie Sprengplattierung, Walzplattieren mit Rohrbiegung und Längsnahtschweißen, Extrudieren zuvor eingeschobener und abgedichteter Hülsen oder hydraulisches, formschlüssiges Innendruckplattieren bei Raumtemperatur mit anschließendem stoffschlüssigem Extrudieren bei höherer Temperatur (US 4,744,504; DE 196 44 999 C1), die einen großen Vorbereitungs- und Durchführungsaufwand erfordern, aus technologischen Gründen zahlreichen Einschränkungen unterliegen und sich zumeist auf kreiszylindrische Gestaltungen beschränken. Versuche, Plattierungshülsen mittels Lotfolien einzulöten, scheiterten, weil in zylindrischen oder anderen nicht ebenen Systemen der stets vorhandene minimale Spalt nicht vollständig mit Lot ausgefüllt werden kann.

Für Außenplattierungen, beispielsweise von Wellen, verwendet man zumeist Auftragsschweißverfahren zum Aufbringen dicker Schichten. Eine andere Möglichkeit ist das heißisostatische Pressen (HIP), bei dem in einer Hochdruckkammer ein mit einer äußeren Hülse oder einer Pulverschicht versehenes Werkstück in einem deformierbaren dichten Behälter eingekapselt wird, der in einem beheizbaren Druck-Kessel bei Temperaturen bis zu 2000 °C und Drücken von 100-200 MPa unter Schutzgas komprimiert wird. Dabei wird der Werkstoff der Hülse bzw. des Pulvers auf den des Werkstücks, z.B. den Wellenkörper, form- und stoffschlüssig aufgepresst (diffusive Verbindung der Werkstoffe an den verbundenen Oberflächen).

Der Erfindung liegt die Aufgabe zugrunde, ein Verfahren bzw. eine Vorrichtung zu schaffen, das bzw. die es ermöglicht, einen räumlichen, form- und/oder stoffschlüssigen Werkstoffverbund aus wenigstens zwei Metallkörpern ohne die den genannten Verfahren anhaftenden Einschränkungen und mit geringerem Aufwand herzustellen.

Diese Aufgabe wird erfindungsgemäß durch ein Verfahren mit den Merkmalen des Anspruchs 1 bzw. durch einen Expansionskörper mit den Merkmalen des Anspruchs 10 zur Verwendung in einem solchen Verfahren oder durch eine Anordnung mit den Merkmalen des Anspruchs 12 gelöst.

Bei dem erfindungsgemäßen Verfahren zum Herstellen eines räumlichen Werkstoffverbunds aus wenigstens zwei Metallkörpern werden zunächst die Metallkörper derart zusammengesetzt, dass zu verbindende Oberflächenbereiche lose aneinander anliegen. "Lose aneinander anliegen" soll hier heißen, dass die Oberflächenbereiche eng, aber nicht spaltfrei aneinander anliegen, wobei makroskopische Konturen formschlüssig ineinandergreifen können. Dann wird dieser Verbund auf eine Zieltemperatur erwärmt. Dabei werden diese Oberflächenbereiche spaltfrei aneinandergedrückt, wobei eine form- und/oder stoffschlüssige Verbindung zwischen den Oberflächenbereichen der Metallkörper hergestellt wird. Der Begriff "formschlüssig" bedeutet hier, dass die Oberflächen eng und spaltfrei aneinander liegen, wobei ein Ineinander-Verzahnen mikroskopischer Oberflächenkonturen stattfindet. Zum Erzeugen des zum Aneinanderdrücken der Oberflächenbereiche erforderlichen Druckes wird wenigstens ein Expansionshohlraum mit einem vorgegebenen Anfangsvolumen in einem der (wenigstens zwei) Metallkörper oder in einem zusätzlichen Expansionskörper, der an wenigstens einem der (wenigstens zwei) Metallkörper anliegt, derart angeordnet, dass bei seiner Expansion die zu verbindenden Oberflächenbereiche gegeneinander gepresst werden. Diese Formulierung besagt, dass mindestens ein Expansionshohlraum vorhanden sein muss; dieser kann in einem der zu verbindenden Metallkörper oder in einem (nicht zu verbindenden) zusätzlichen Expansionskörper ausgebildet sein. Es können aber auch mehrere Expansionshohlräume in einem Körper oder Expansionshohlräume in mehreren Körpern vorhanden sein. Eine vorgegebene Stoffmenge (veraltete Bezeichnung: Molmenge) wenigstens eines Stoffes, der zumindest bei der Zieltemperatur gasförmig ist oder vor dem Erreichen der Zieltemperatur zumindest einen bei der Zieltemperatur gasförmigen Stoff in einem vorgegebenen Mengenanteil bildet, wird in den Expansionshohlraum gefüllt und hermetisch eingeschlossen, wobei die Innenwandung des Expansionshohlraums aus einem Material besteht, das den wenigstens einen gasförmigen Stoff nicht absorbieren und nicht mit diesem unter Änderung der Stoffmenge des wenigstens einen gasförmigen Stoffes reagieren kann. Dies besagt, dass der Stoff von einer Art sein muss, die zumindest bei der Zieltemperatur zu einer exakt vorgebbaren Stoffmenge eines im Hohlraum eingeschlossenen Gases oder auch eines Gemischs mehrerer Gase führt. Die vorgegebene Stoffmenge wird dabei so gewählt, dass in dem Expansionshohlraum bei Erreichen der Zieltemperatur ein vorgegebener Druck erreicht wird, der über eine Deformation des den Expansionshohlraum enthaltenden Metallkörpers oder (sofern sich der Expansionshohlraum in einem Expansionskörper befindet) des Expansionskörpers und wenigstens eines der anliegenden Metallkörper (d.h. über eine Deformation eines an dem Expansionskörper selbst anliegenden Metallkörpers und gegebenenfalls über eine Deformation eines wiederum an diesem Metallkörper anliegenden Metallkörpers und so weiter) zum Schließen vorhandener Spalte zwischen den zu verbindenden Oberflächenbereichen ausreicht.

Grundgedanke der Erfindung ist die Verwendung eines Expansionshohlraums oder mehrerer Expansionshohlräume in wenigstens einem der Metallkörper oder in einem oder mehreren separaten Expansionskörpern. Der erfindungsgemäße Expansionskörper weist wenigstens einen Expansionshohlraum mit einem vorgegebenen Volumen auf, in dem eine vorgegebene Stoffmenge wenigstens eines Stoffes, der zumindest bei einer Zieltemperatur gasförmig ist oder vor dem Erreichen der Zieltemperatur zumindest einen gasförmigen Stoff in einem vorgegebenen Mengenanteil bildet, hermetisch eingeschlossen ist, wobei die Innenwandung des Expansionshohlraums aus einem Material besteht, das den wenigstens einen gasförmigen Stoff nicht absorbieren und nicht mit diesem unter Änderung der Menge des gasförmigen Stoffes reagieren kann, wobei die vorgegebene Stoffmenge so gewählt ist, dass in dem Expansionshohlraum bei Erreichen der Zieltemperatur ein vorgegebener Druck erreicht wird.

Der Expansionshohlraum bzw. die Expansionshohlräume lassen sich dabei gezielt so formen und anordnen, dass ein an die räumliche Anordnung der zu verbindenden Oberflächenbereiche angepasstes Spannungs-Dehnungsfeld in dem Werkstoffverbund entsteht und die gewünschten Deformationen und Kriechbewegungen auftreten. Diese sind von den Volumina der Expansionshohlräume und den Wandungsflächen und Wandungsstärken der diese Hohlräume umgebenden Wandungen abhängig. In einem einfachen Fall einer Innenplattierung eines kreiszylindrischen Rohres beispielsweise kann ein langgestreckter kreiszylindrischer Expansionshohlraum geringen Durchmessers axial im Zentrum des Verbunds angeordnet und von einer Wandung vorgegebener Dicke umgeben sein; es kann hier auch sinnvoll sein, mehrere (z.B. zwei bis vier) separate kürzere Expansionskörper mit kreiszylindrischen langgestreckten Expansionshohlräumen axial hintereinander im Zentrum des Rohres aufzureihen, um die Deformation des Rohres gleichmäßiger über dessen Länge zu verteilen. Bei komplizierteren räumlichen Strukturen sind ggf. verschieden geformte Expansionskörper und -hohlräume in dem Verbund anzuordnen.

Bei einer Ausführungsform des erfindungsgemäßen Verfahrens wird eine vorgegebene Stoffmenge in den Expansionshohlraum gefüllt, indem ein gasförmiger Stoff in den Expansionshohlraum bei einer vorgegebenen Einbringungstemperatur und einem vorgegebenen Einbringungsdruck eingebracht wird. Bei einer anderen Ausführungsform des erfindungsgemäßen Verfahrens wird eine vorgegebene Stoffmenge in den Expansionshohlraum gefüllt, indem eine vorgegebene Stoffmenge eines festen oder flüssigen Stoffs in den Expansionshohlraum eingebracht wird. Beispielsweise wird der feste oder flüssige Stoff mit einer vorgegebenen Masse oder mit einem vorgegebenen Volumen (bei vorgegebener Temperatur, z.B. Raumtemperatur) eingebracht. Auch Kombinationen beider Vorgehensweisen sind denkbar. Beim Einbringen des festen oder flüssigen Stoffs kann zusätzlich ein Gas oder Gasgemisch eingeschlossen werden, beispielsweise die bei Normaldruck und Raumtemperatur im Hohlraum vorhandene Luftmenge. Vorzugsweise wird eine vorgegebene Stoffmenge einer Kohlenwasserstoffverbindung (z.B. Alkohol oder Paraffin) und/oder Wasser in den Expansionshohlraum eingebracht.

Bei einer bevorzugten Weiterbildung des erfindungsgemäßen Verfahrens werden das Anfangsvolumen des Expansionshohlraums und die vorgegebene Stoffmenge auf die vorgesehene Ausdehnung des Expansionskörpers aufgrund des Schließens der Spalte und aufgrund der zulässigen maximalen Deformation der Metallkörper so abgestimmt, dass der Expansionsvorgang aufgrund abfallenden Druckes in dem expandierten Expansionshohlraum endet, bevor eine zulässige maximale Deformation wenigstens eines der Metallkörper überschritten werden kann, wobei das Anfangsvolumen so eingestellt wird, dass eine gewünschte Steilheit des Druckabfalls bei Erreichen der vorgesehenen Ausdehnung des Expansionskörpers erreicht wird. Dies gestattet eine Selbstregulation, indem das Gesetz Druck x Volumen = konstant ausgenutzt wird. Das Volumen des Expansionshohlraums wird in Abhängigkeit von den abgeschätzten Volumina der zu schließenden Spalte, den gewünschten Dehnungen (Expansion), der Zieltemperatur und der Warmkriechfestigkeit der Materialien so eingestellt, dass - während des Haltens auf der Zieltemperatur - bei Erreichen einer vorgegebenen Maximaldehnung der Druck soweit abgefallen ist, dass er nicht mehr zur fortgesetzten Deformation ausreicht, weil die im Metallkörper erzeugten Spannungen unter die Kriechgrenze bei der gegebenen Temperatur (Zieltemperatur) fallen. Der Verformungsprozess (Dehnprozess) kommt zum Stillstand. Die Steilheit des Druckabfalls bei gegebenen Spaltvolumina und gegebener Dehnung wird durch die Vorgabe des Anfangsvolumens des Expansionshohlraums justiert; ein kleines Anfangsvolumen führt zu stärkerem Druckabfall.

Eine Ausführungsform des erfindungsgemäßen Verfahrens ist dadurch gekennzeichnet, dass zwischen oder auf den zu verbindenden Oberflächenbereichen beim Herstellen des losen Verbunds eine Schicht oder Folie aus einem Lotmaterial eingebracht wird, wobei das Lotmaterial spätestens bei Erreichen der Zieltemperatur schmilzt, den Raum zwischen den zu verbindenden Oberflächenbereichen ausfüllt und eine stoffschlüssige Verbindung mit den Materialien der Oberflächenbereiche eingeht. Dieses Verfahren hat gegenüber herkömmlichen Lötverfahren den Vorteil, dass die verbleibenden Spalte und somit die ansonsten beim Schmelzen des Lots verbleibenden Hohlräume zwischen den zu verbindenden Oberflächenbereichen durch den ausgehend vom Expansionshohlraum erzeugten Druck geschlossen werden, so dass eine dichte, geschlossene Lot-Verbindungsschicht verbleibt.

Eine weitere Ausführungsform des erfindungsgemäßen Verfahrens ist dadurch gekennzeichnet, dass zwischen dem den Expansionshohlraum enthaltenden Metallkörper oder dem Expansionskörper einerseits und einem Metallkörper andererseits ein mit Metallpulver gefüllter Zwischenraum vorgesehen wird, und dass die vorgegebene Stoffmenge so gewählt wird, dass in dem Expansionshohlraum spätestens bei Erreichen der Zieltemperatur ein vorgegebener Druck erreicht wird, der ausreicht, um den mit Metallpulver gefüllten Zwischenraum zu einem Metallkörper zu pressen und/oder zu sintern, wobei mit den zu verbindenden Oberflächenbereichen der anliegenden Metallkörper eine feste Verbindung hergestellt wird. Das Pulver kann in einem Zwischenraum zwischen zwei zu verbindenden Metallkörpern oder auch in einem Raum zwischen einem Metallkörper und einem (nicht zu verbindenden) Expansionskörper enthalten sein. Im erstgenannten Fall bildet das Metallpulver eine Verbindungsschicht zwischen den beiden Metallkörpern; im zweiten Fall bildet das Metallpulver eine Plattierung einer Oberfläche, nachdem der Expansionskörper entfernt wurde.

Bei einer bevorzugten Ausführungsform des erfindungsgemäßen Verfahrens wird die vorgegebene Stoffmenge so gewählt, dass in dem Expansionshohlraum spätestens bei Erreichen der Zieltemperatur ein vorgegebener Druck erreicht wird, der zum Herstellen einer formschlüssigen Verbindung zwischen den Oberflächenbereichen der Metallkörper ausreicht. Der Begriff "formschlüssig" bedeutet hier, dass die Oberflächen eng und spaltfrei aneinander liegen, wobei ein Ineinander-Verzahnen mikroskopischer Oberflächenkonturen stattfindet. Vorzugsweise werden hierbei das Anfangsvolumen des Expansionshohlraums und die Stoffmenge zusätzlich so dimensioniert, dass die zu verbindenden Oberflächenbereiche mit einem derart hohen Druck aneinandergepresst werden, dass zwischen den zu verbindenden Oberflächenbereichen eine fest-diffusive metallische Verbindung ausgebildet wird, wenn die Zieltemperatur für eine vorgegebene Haltedauer gehalten oder ein zeitlicher Temperaturverlauf oberhalb der Zieltemperatur eingehalten wird. Die Zieltemperatur ist hierbei diejenige Temperatur, bei der sich die fest-diffusive Verbindung ausbildet; diese muss erreicht und für eine Mindestzeitdauer gehalten werden. Es kann aber auch ein Temperaturverlauf vorgesehen werden, bei der die Temperatur nach Erreichen der Zieltemperatur noch weiter angehoben wird, beispielsweise zum Einleiten weiterer Prozesse, wie z.B. einem Härten eines beteiligten Werkstoffs. Der Temperaturverlauf und die Haltedauern wirken sich auf die durch Kriechen der Werkstoffe erreichte Expansion aus. Wie oben ausgeführt, kann allerdings die maximale Deformation der Körper durch eine mittels des Anfangsvolumens des Expansionshohlraums einstellbare Selbstregulation begrenzt werden.

Bei einer Ausführungsform des Verfahrens wird wie folgt vorgegangen. Zunächst wird der Expansionshohlraum eines Expansionskörpers befüllt und verschlossen. Hierbei können beispielsweise mehrere universell einsetzbare Expansionskörper vorgegebener Anfangsvolumina, die vorgegebene Stoffmengen enthalten, bereitgestellt werden. Dann wird auf den Expansionskörper wenigstens ein Metallkörper in Form einer Hülse aus einem Plattierwerkstoff aufgeschoben und dann dieser Verbund in eine Bohrung oder Aufnahme passender Kontur eines innen zu plattierenden Metallkörpers eingeschoben. Alternativ können auch erst die Hülsen und dann der Expansionskörper eingeschoben werden. Dabei können auf den Expansionskörper beispielsweise mehrere Metallkörper in Form nebeneinander und/oder übereinander angeordneter Hülsen aus gleichen oder unterschiedlichen Werkstoffen aufgeschoben werden. Hierbei können mehrere Hülsen unterschiedlicher Materialien zum Herstellen gewünschter Mehrschichtplattierungen übereinander eingeschoben werden, beispielsweise zum Einbringen funktioneller Sperrschichten in einer Sandwichbauweise.

Bei einer Ausführungsform kann zwischen zwei Hülsenmaterialien hoher Dehnbarkeit und niedriger Festigkeit, wie beispielsweise Kupfer, vorteilhafterweise eine dünne Zwischenschicht aus einem Material hoher Festigkeit, wie beispielsweise Edelstahl, angeordnet werden. Dies ist besonders vorteilhaft bei einer Verwendung des Werkstoffverbundbauteiles als thermisch hoch beanspruchtes Bauteil mit innenplattierten Kanälen zur Aufnahme von Flüssigkeiten, insbesondere Kühlflüssigkeiten. Hier kann die eingeschobene Schicht der Sandwichstruktur, beispielsweise die Edelstahlschicht, die Funktion einer Sperrschicht übernehmen, die beispielsweise einen durch Haarrisse in der inneren Plattierungsschicht eintretenden, unerwünschten Flüssigkeitsdurchtritt (Leckage) unterbindet.

Bei einer anderen Ausführungsform des Verfahrens wird zunächst der Expansionshohlraum eines aus einem Plattiermaterial bestehenden ersten Metallkörpers befüllt und verschlossen. Dann wird der erste Metallkörper in eine Bohrung oder Aufnahme passender Kontur eines innen zu plattierenden zweiten Metallkörpers eingeschoben. Bei dieser einfachen Variante übernimmt der erste Metallkörper zugleich die Funktionen des Expansionskörpers und der Plattierungshülse.

Bei einer weiteren Ausführungsform des Verfahrens wird zunächst der Expansionshohlraum eines Expansionskörpers befüllt und verschlossen. Dann wird in eine Bohrung oder Aufnahme passender Kontur des Expansionskörpers wenigstens ein Metallkörper in Form einer Hülse aus einem Plattierwerkstoff eingeschoben und dann ein außen zu plattierender Metallkörper in eine Bohrung wenigstens einer innersten Hülse dieses Verbunds eingeschoben. Die Reihenfolge des Aufeinanderschiebens kann auch abweichen. Der außen angeordnete Expansionskörper kann so beschaffen sein, dass er sich - beim Expandieren des Expansionshohlraums - im Wesentlichen nur nach innen dehnt; beispielsweise eine wesentlich stärkere außen liegende Hohlraumwandung im Vergleich zur innen liegenden Wandung haben. Der Expansionskörper kann auch mehrere Expansionshohlräume oder miteinander verbundene Expansionskammern enthalten, die entlang seines Umfangs verteilt angeordnet sind.

Vorzugsweise wird bei einer Ausführungsform die vorgegebene Stoffmenge so bemessen, dass nach dem Erreichen der Zieltemperatur und einem Halten des Werkstoffverbunds auf der Zieltemperatur sowie bei einem nachfolgenden Abkühlen auf eine geringere Temperatur noch ein derart hoher Druck aufrechterhalten bleibt, dass die dadurch erzeugten Spannungen die Warmkriechgrenzen der Werkstoffe zumindest des Expansionskörpers und der Metallkörper, gegebenenfalls mit Ausnahme des von dem Expansionskörper am weitesten entfernt angeordneten Metallkörpers, überschreiten. Dies ist insbesondere bei Werkstoffkombinationen mit unterschiedlichen thermischen Ausdehnungskoeffizienten vorteilhaft, beispielsweise beim Aufbringen einer Kupferplattierung auf einen Stahlkörper. Wird ein solcher Druck, bei dem die erzeugten Spannungen die Warmkriechgrenzen der Werkstoffe (z.B. des Kupfers) noch übersteigen, bis zu einer ausreichend tiefen Abkühltemperatur gehalten, so kann die Gefahr eines partiellen oder vollständigen Ablösens der Plattierung von der Oberfläche des Grundkörpers verringert oder beseitigt werden. Versuche haben gezeigt, dass die für solche Ablösevorgänge kritische Temperaturzone etwa auf halber Höhe der Abkühlkurve endet, beispielsweise bei etwa 500 °C, wenn die Verbindungstemperatur bei etwa 1000 °C lag.

Eine Ausführungsform des erfindungsgemäßen Verfahrens ist dadurch gekennzeichnet, dass der den Expansionshohlraum enthaltende Metallkörper bzw. der Expansionskörper sowie die gegebenenfalls vorhandenen Metallkörper, die unmittelbar oder näher am Expansionsköper angeordnet sind, eine wesentlich geringere Warmzugfestigkeit als weiter vom Expansionshohlraum entfernt angeordnete Metallkörper, vorzugsweise nur einen Bruchteil der Warmzugfestigkeit der weiter entfernt angeordneten Metallkörper, haben. Dies gestattet ein Herandrücken (Herankriechen-Lassen) der Körper geringerer Warmkriechfestigkeit ausgehend vom Expansionshohlraum bis hin an den am weitesten vom Hohlraum entfernt angeordneten Körper. Dieses Herandrücken ist auch bei Schichten einer Innenplattierung möglich, die zwar keine wesentlich geringere Warmzugfestigkeit aufweisen, aber eine wesentlich geringere Dicke als die weiter vom Expansionshohlraum entfernt angeordneten, äußeren Metallkörper haben.

Eine Ausführungsform des Verfahrens ist dadurch gekennzeichnet, dass der Verbund auf eine Temperatur erwärmt wird, die oberhalb der zum Herstellen der gewünschten form- und/oder stoffschlüssigen Verbindung erforderlichen Zieltemperatur liegt und einer für eine Materialbehandlung wenigstens eines der Metallkörper vorgegebenen Temperatur entspricht. So lassen sich beispielsweise weitere erforderliche Herstellungsverfahrensschritte, wie z.B. ein Härtungsprozess, berücksichtigen und zudem noch in energiesparender Weise für die Verbindungstechnik ausnutzen. Zum Beispiel kann wenigstens ein Metallkörper aus einem härtbaren Metall bestehen und der Verbund auf eine Härtetemperatur des härtbaren Metalls erwärmt werden. Der ohnehin erforderliche Härteschritt (z.B. Härten eines Stahlgrundkörpers) kann somit zur Expansion des Expansionsköpers und zur Herstellung der Plattierung (z.B. Kupferplattierung) ausgenutzt werden. Ähnliches gilt für einen Lötschritt bei einer die Schmelztemperatur einer im Werkstoffverbund enthaltenen Lotschicht übersteigenden Temperatur.

Der erfindungsgemäße Expansionskörper ist vorzugsweise dadurch gekennzeichnet, dass der hermetisch eingeschlossene wenigstens eine Stoff eine Kohlenwasserstoffverbindung und/oder Wasser umfasst. Ein solcher Stoff ist preiswert und einfach bereitzustellen und zu dosieren und erleichtert damit die Einbringung einer exakten Stoffmenge.

Bei einer bevorzugten Ausführungsform ist der Expansionskörper dadurch gekennzeichnet, dass zumindest das Material der Innenwandung des Expansionshohlraums Kupfer oder eine Kupferlegierung ist. Kupfer ist in vielerlei Hinsicht vorteilhaft. In vielen Anwendungen kann es vorteilhaft als guter Wärmeleiter eingesetzt werden. Darüber hinaus reagiert es auch bei höheren Temperaturen nicht mit vielen Kohlenwasserstoffverbindungen oder Wasser.

Die erfindungsgemäße Anordnung, wie sie zur Ausführung des erfindungsgemäßen Verfahrens Anwendung findet, dient zum Herstellen eines räumlichen Werkstoffverbunds aus wenigstens zwei Metallkörpern, die an miteinander zu verbindenden Oberflächenbereichen im Ausgangszustand lose aneinander anliegen, wobei der zunächst noch lose Verbund zum Herstellen einer festen form- und/oder stoffschlüssigen Verbindung zwischen den Metallkörpern erwärmt und auf eine Zieltemperatur gebracht wird und dabei diese Oberflächenbereiche aneinandergedrückt werden. Bei der erfindungsgemäßen Anordnung ist in einem der Metallkörper oder in einem zusätzlichen Expansionskörper, der an wenigstens einem der Metallkörper anliegt, wenigstens ein Expansionshohlraum mit einem vorgegebenen Anfangsvolumen derart angeordnet, dass bei seiner Expansion die zu verbindenden Oberflächenbereiche ganzflächig gegeneinander gepresst werden. Eine vorgegebene Stoffmenge wenigstens eines Stoffes, der zumindest bei der Zieltemperatur gasförmig ist oder vor dem Erreichen der Zieltemperatur zumindest einen gasförmigen Stoff in einem vorgegebenen Mengenanteil bildet, ist in dem Expansionshohlraum hermetisch eingeschlossen, wobei die Innenwandung des Expansionshohlraums aus einem Material besteht, das den wenigstens einen gasförmigen Stoff nicht absorbieren und nicht mit diesem unter Änderung der Menge des gasförmigen Stoffes reagieren kann. Die vorgegebene Stoffmenge ist dabei so gewählt, dass in dem Expansionshohlraum bei Erreichen der Zieltemperatur ein vorgegebener Druck erreicht wird, der über eine Deformation des den Expansionshohlraum enthaltenden Metallkörpers bzw. des Expansionskörpers und wenigstens eines der anliegenden Metallkörper zum Schließen vorhandener Spalte zwischen den zu verbindenden Oberflächenbereichen ausreicht.

Der Expansionshohlraum bzw. die Expansionshohlräume lassen sich dabei gezielt so gestalten und anordnen, dass ein an die räumliche Anordnung der zu verbindenden Oberflächenbereiche angepasstes Spannungs-Dehnungsfeld in dem Werkstoffverbund der Anordnung entsteht und die gewünschten Deformationen und Kriechbewegungen auftreten. Diese sind von den Volumina der Expansionshohlräume und den Wandungsstärken der diese Hohlräume umgebenden Wandungen abhängig.

Beispielsweise ist die Anordnung zum Herstellen eines räumlichen Werkstoffverbunds aus wenigstens zwei Metallkörpern dadurch gekennzeichnet, dass der Expansionshohlraum die zu verbindenden Körper außen umgibt und dass der Expansionshohlraum außen von einem starren Körper derart umschlossen wird, dass er im Wesentlichen nur nach innen expandieren kann.

Bei einem alternativen Ausführungsbeispiel ist die Anordnung zum Herstellen eines räumlichen Werkstoffverbunds aus wenigstens zwei Metallkörpern dadurch gekennzeichnet, dass der Expansionshohlraum von den zu verbindenden Oberflächenbereichen umschlossen wird.

Bei einer bevorzugten Ausführungsform ist die Anordnung zum Herstellen eines räumlichen Werkstoffverbunds aus wenigstens zwei Metallkörpern dadurch gekennzeichnet, dass die Anordnung im Wesentlichen zylindrisch ist, so dass die zu verbindenden Oberflächenbereiche eine Mantelfläche der zylindrischen Anordnung bilden, und dass sich der Expansionshohlraum in axialer Richtung zwischen den Stirnseiten der zylindrischen Anordnung erstreckt. "Zylindrisch" ist hier nicht auf kreiszylindrisch beschränkt; unter einem Zylinder soll hier ein von zwei parallelen, ebenen, kongruenten Flächen (Grund- und Deckfläche) und einer Mantel- bzw. Zylinderfläche, die von parallelen Geraden gebildet wird, begrenzter Körper verstanden werden. Diese Gestaltung erleichtert das Zusammensetzen der Anordnung, indem die einzelnen Körper in axialer Richtung parallel zur Mantelfläche aufeinander geschoben werden können.

Bei einer Weiterbildung der Anordnung zum Herstellen eines räumlichen Werkstoffverbunds aus wenigstens zwei Metallkörpern haben der den Expansionshohlraum enthaltende Metallkörper bzw. der Expansionskörper sowie die gegebenenfalls vorhandenen Metallkörper, die unmittelbar oder näher am Expansionsköper angeordnet sind, eine wesentlich geringere Warmzugfestigkeit als weiter vom Expansionshohlraum entfernt angeordnete Metallkörper (der am weitesten entfernt angeordnete Metallkörper ist hier beispielsweise der Grundkörper), vorzugsweise nur einen Bruchteil der Warmzugfestigkeit der weiter entfernt angeordneten Metallkörper. Dies erleichtert das Schließen der Spalträume bei relativ formstabilem Grundkörper.

Bei einer solchen Anordnung bestehen die Metallkörper mit der geringeren Warmzugfestigkeit beispielsweise aus Kupfer oder einer Kupferlegierung und die Metallkörper (z.B. Grundkörper) mit der höheren Warmzugfestigkeit beispielsweise aus einem Stahl.

Vorteilhafte und/oder bevorzugte Ausführungsformen der Erfindung sind in den Unteransprüchen gekennzeichnet.

Nachfolgend soll die Erfindung anhand von in den Zeichnungen dargestellten bevorzugten Ausführungsbeispielen erläutert werden. In den Zeichnungen zeigen:
Figur 1 eine schematische Schnittansicht einer für eine Außenplattierung geeigneten erfindungsgemäßen Anordnung; und
Figur 2 eine schematische Schnittansicht einer für eine Innenplattierung geeigneten erfindungsgemäßen Anordnung.

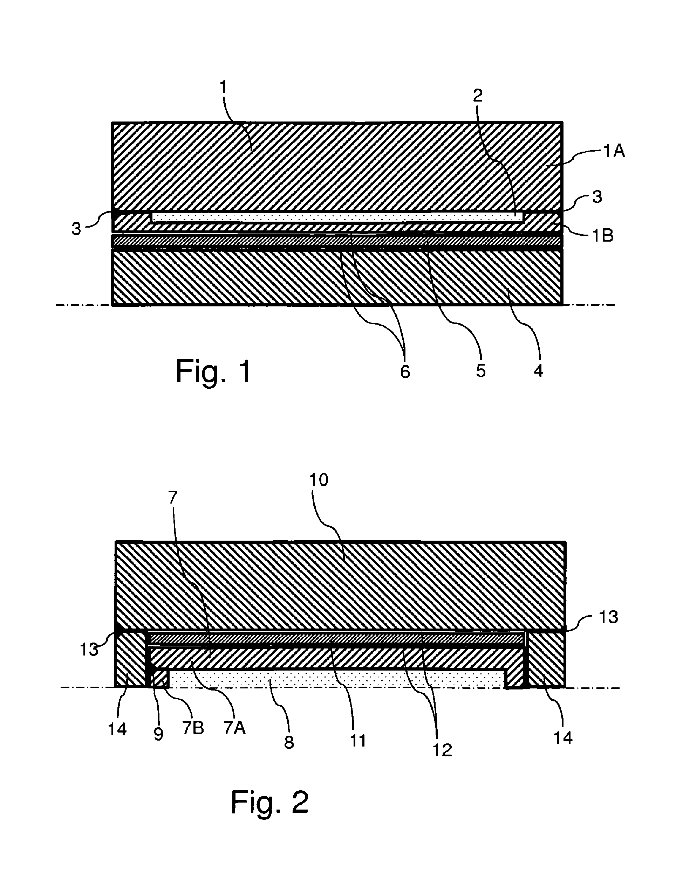

Die nachfolgend anhand der Figuren 1 und 2 beschriebenen bevorzugten Ausführungsbeispiele betreffen Anordnungen, bei denen vorzugsweise eine fest-diffusive Verbindung zwischen einem Grundkörper, der beispielsweise aus Stahl besteht, und einer ein- oder mehrschichtigen Innen- oder Außenplattierung, z.B. aus Kupfer, angestrebt wird.

Figur 1 zeigt eine schematische Darstellung eines Ausschnitts einer erfindungsgemäßen Anordnung zum Herstellen eines räumlichen Werkstoffverbunds, bei der ein Grundkörper 4 aus einem ersten Metall mit einer Außenplattierung eines zweiten Materials versehen wird. Die in Figur 1 gezeigte Schnittdarstellung eines kreiszylindrischen Körpers zeigt nur die obere Hälfte der Schnittebene. Die gestrichelte Linie stellt die Achse des zylindrischen Körpers dar. Ein Grundkörper 4, beispielsweise aus Stahl, soll mit einer Außenplattierung aus einem zweiten Material, beispielsweise Kupfer, versehen werden. Zu diesem Zweck wird auf den Grundkörper 4 eine Hülse 5 des zweiten Materials, also z.B. eine Kupferhülse, aufgeschoben. Auf die Hülse 5 wiederum wird ein Expansionskörper 1 aufgeschoben. Der Expansionskörper 1 besteht aus zwei konzentrischen Teilhülsen 1A und 1B, zwischen denen ein Hohlraum 2 ausgebildet ist. Die beiden Hülsen 1A und 1B des Expansionskörpers 1 sind an den axialen Enden fest derart miteinander verbunden, beispielsweise durch Schweißnähte 3, dass der Hohlraum 2 hermetisch abgedichtet ist. In dem als Expansionshohlraum dienenden Hohlraum 2, der ein vorgegebenes Anfangsvolumen aufweist, befindet sich beispielsweise ein Gas in einer vorgegebenen Stoffmenge. Zwischen dem Grundkörper 4 und der aufgeschobenen Hülse 5 sowie zwischen der Hülse 5 und dem Expansionskörper 1 verbleiben (aufgrund technologisch bedingter Rauhigkeiten und Unebenheiten und aufgrund eines geringfügig geringeren Außenmaßes des Grundkörpers 4 im Vergleich zum Innenmaß der Hülse 5, was das Aufschieben erst ermöglicht) jeweils Restspalte 6. Die in dem Expansionshohlraum 2 eingeschlossene Stoffmenge bestimmt sich im Falle eines gasförmigen Stoffes durch das Volumen, die Temperatur und den Druck. Beispielsweise wird das Gas bei einer vorgegebenen Temperatur und einem vorgegebenen Druck eingefüllt und die gasdichte Verbindung zwischen den Teilhülsen 1A und 1B des Expansionskörpers 1 bei dieser Temperatur und diesem Druck hergestellt. Alternativ findet das Verschließen des Hohlraums 2 bei Raumtemperatur statt und wird in den Hohlraum neben der vorhandenen Luft eine vorgegebene Menge eines festen oder flüssigen Stoffes, beispielsweise eines Kohlenwasserstoffs und/oder Wasser, eingebracht.

Nach dem losen Zusammensetzen des räumlichen Verbunds aus Grundkörper 4, Hülse 5 und Expansionskörper 1 erfolgt eine Erwärmung des Verbundsystems bis zu einer vorgegebenen Zieltemperatur, bei der eine Verbindung zwischen den aneinander anliegenden Oberflächen der Körper 4 und 5 gebildet werden soll. Bei der Erwärmung steigt der Gasdruck im Expansionskörper 1 und dehnt diesen nach Überschreiten der Warmkriechgrenze des Werkstoffs des Expansionskörpers 1 langsam aus, wobei er sich im Laufe dieses Dehnprozesses zunächst an die Plattierwerkstoff-Hülse 5 anlegt, indem er den zwischen dem Expansionskörper 1 und der Hülse 5 verbleibenden Spalt 6 schließt. Anschließend wird dann die Plattierwerkstoff-Hülse 5 (beispielsweise Kupferhülse) nach Überschreiten der Warmkriechgrenze des Werkstoffs der Hülse 5 auf den zu plattierenden Grundkörper 4 gedrückt, wobei sich der zwischen diesen Körpern 4 und 5 vorhandene Spalt 6 ebenfalls schließt. Die Plattierwerkstoff-Hülse 5 legt sich mikroskopisch eng an die Oberfläche des zu plattierenden Grundkörpers 4 an. Anschließend wirkt die von dem Expansionskörper 1, d. h. von dem sich ausdehnendenden Expansionshohlraum 2, ausgehende Dehnkraft direkt auf die zu verbindenden Oberflächen zwischen dem Grundkörper 4 und der Hülse 5. Die Temperatur wird weiter bis zu der vorgesehenen Endtemperatur (Zieltemperatur) erhöht, und dann so lange gehalten, bis sich die angestrebte feste diffusive metallische Verbindung zwischen den Werkstoffen des Grundkörpers 4 und der Hülse 5, beispielsweise zwischen dem Stahl des Grundkörpers 4 und dem Kupfer der Hülse 5, ausgebildet hat. Nach Beendigung der Haltezeit wird der gesamte Verbund langsam bis auf Raumtemperatur abgekühlt. Wesentlich ist nun, dass nach erfolgtem Stoffschluss, d. h. Entstehung einer fest-diffusiven Verbindung, während der Haltezeit und auch noch während der Abkühlphase weiterhin ein so hoher Druck aufrechterhalten bleibt, dass die durch den Expansionskörper 1 erzeugten Spannungen die jeweiligen Warmkriechgrenzen der Werkstoffe des Expansionskörpers 1 und der Hülse 5 überschreiten und so ein partielles oder gar vollständiges Ablösen der Plattierung vom plattierten Körper für den Fall unterschiedlicher thermischer Ausdehnungskoeffizienten verhindert wird. Versuche haben gezeigt, dass die für solche Ablösungsvorgänge kritische Temperaturzone spätestens etwa auf halber Höhe der Abkühlkurve endet. Bei einer Verbindungstemperatur von etwa 1000°C endete die kritische Temperaturzone etwa bei 500°C. Bis zu einer Abkühlung auf diese Temperatur von beispielsweise 500°C sollte somit ein Druck aufrechterhalten bleiben, der in der Kupferhülse Spannungen erzeugt, die die jeweilige Warnkriechgrenze des Materials bei der jeweiligen Temperatur überschreiten.

Nach dem Abkühlen kann der Expansionskörper 1 von dem hergestellten Verbund aus Grundkörper 4 und Plattierung 5 entfernt werden.

Figur 2 zeigt eine schematische Darstellung der erfindungsgemäßen Anordnung für den Fall einer Innenplattierung. Eine innere Bohrung eines Grundkörpers 10, der beispielsweise aus Stahl besteht, soll mit einer Schicht aus einem zweiten Material, beispielsweise Kupfer, innen plattiert werden. Zu diesem Zweck wird in eine Bohrung des Grundkörpers 10 eine Hülse 11 aus dem Plattiermaterial eingeschoben. In die Bohrung der Hülse 11 wird dann ein Expansionskörper 7 eingeschoben, der aus einer zylindrischen Hülse 7A und einem Verschlussstopfen 7B besteht. Im Inneren des Expansionskörpers 7 befindet sich ein Expansionshohlraum 8. Nach dem Einschieben der Plattierwerkstoff-Hülse 11 und des Expansionskörpers 7 in die Bohrung des Grundkörpers 10 wird die Bohrung durch zwei Fixierstopfen 14 beidseitig verschlossen. Nach dem Einbringen der vorgegebenen Stoffmenge in den Expansionshohlraum 8 des Expansionskörpers 7, wie es bereits anhand der Ausführungsform der Figur 1 beschrieben wurde, wird der Hohlraum 8 durch den Stopfen 7B verschlossen, wobei die Verbindungsstelle gasdicht verschweißt wird. Die Schweißnaht ist hier mit der Bezugsziffer 9 gekennzeichnet. Ebenso werden die Fixierstopfen 14 fest eingeschweißt, was durch die Schweißnähte 13 angedeutet ist.

Der in Figur 2 gezeigte Verbund zum Herstellen einer Innenplattierung wird, wie es bereits anhand von Figur 1 beschrieben worden ist, ebenfalls bis auf die Zieltemperatur erwärmt und dann auf dieser Temperatur gehalten, wobei in dem Expansionshohlraum 8 ein Druck entsteht, der zu Spannungen in dem Verbund führt, die die Warmkriechgrenzen bei der Zieltemperatur überschreiten. Wiederum drückt sich zunächst der Expansionskörper 7 nach außen an die Plattierwerkstoff-Hülse 11 an, wobei der Spalt 12 geschlossen wird. Anschließend wird die Plattierwerkstoff-Hülse 11 nach außen an die Wandung der Bohrung des Grundkörpers 10 angepresst, wobei sich auch dort der Spalt 12 schließt. Nach dem Schließen der Spalte 12 wirken die von dem Druck in dem Expansionshohlraum 8 erzeugten Spannungen direkt auf die zu verbindenden Oberflächen zwischen der Hülse 11 und dem Grundkörper 10 ein. Wird dieser Druck ausreichend lange aufrechterhalten, so wird wiederum eine (bei den hier beschriebenen Ausführungsbeispielen angestrebte) fest-diffusive Verbindung hergestellt. Beim Abkühlen wird wiederum ein Druck erzeugt, der zu Spannungen führt, die die Warmkriechgrenzen einerseits des Werkstoffs des Expansionskörpers 7 als auch andererseits des Werkstoffs der Plattierwerkstoff-Hülse 11, also beispielsweise von Kupfer, übersteigen. Dies sichert im Falle unterschiedlicher thermischer Ausdehnungskoeffizienten und somit unterschiedlich starker Kontraktionen eine Nachspeisung des Plattierwerkstoffs und verhindert somit ein partielles oder gar vollständiges Ablösen der Plattierung vom Grundkörper 10.

In einem letzten Arbeitsschritt können die seitlichen, druckaufnehmenden mechanischen Fixierstopfen 14 entfernt und die gewünschte Dicke der Plattierung durch ein Aufbohren erzielt werden.

Bei einer Weiterbildung der beschriebenen Vorgehensweise wird die Gesetzmäßigkeit, nach der das Produkt aus Druck und Volumen konstant ist, derart ausgenutzt, dass ein selbstregulierender und am gewünschten Punkt der Verformung zum Stillstand kommender Verformungsprozess (Dehnprozess) in dem Werkstoffverbund entsteht. Dies wird dadurch erreicht, dass das im Ausgangszustand vorgegebene Volumen (Anfangsvolumen) des Expansionshohlraums 2 bzw. 8 im Expansionskörper 1 bzw. 7 in Abhängigkeit von den abgeschätzten Volumina der zu beseitigenden Spalte 6 bzw. 12 und unter Berücksichtigung des bei der Prozesstemperatur erzeugten Gasdrucks sowie der bei der Prozesstemperatur bestehenden Warmkriechfestigkeiten der an der Verformung beteiligten Materialien so gewählt werden, dass der Expansionsvorgang endet, bevor der Außenkörper im Falle der Innenplattierung bzw. der Innenkörper im Falle der Außenplattierung eine nicht mehr tolerierte makroskopische Deformation erleidet. Dieser Wirkmechanismus kann durch die Größe des Volumens des Expansionshohlraums 2 bzw. 11 eingestellt werden. Je kleiner dieses Volumen im Ausgangszustand gewählt wird, desto steiler fällt der Druck ab, wenn die Spalte geschlossen und der Außenkörper (im Falle der Innenplattierung; Figur 2) gedehnt wird. Der Deformationsprozess kommt zum Stillstand, wenn in Folge des Druckabfalls die im Außenkörper 10 erzeugten Spannungen unter dessen Warmkriechfestigkeit fallen.

Im Rahmen des Erfindungsgedankens sind zahlreiche alternative Ausführungsformen denkbar. In einem einfachen Fall kann der Expansionskörper entfallen und der Expansionshohlraum direkt in einem der zu verbindenden Metallkörper ausgebildet sein. Es können eine Mehrzahl von Expansionskörpern nebeneinander und an anderen räumlichen Positionen eingebracht werden. Anstelle einer Plattierwerkstoff-Schicht können auch mehrere Schichten verschiedener Werkstoffe übereinander angeordnet sein. Auch können mehrere Plattierwerkstoff-Hülsen nebeneinander angeordnet werden. Zwischenräume zwischen verschiedenen Hülsen können auch mit einem Metallpulver eines bevorzugten Plattierwerkstoffs befüllt werden, wobei bei den im Prozess auftretenden Drücken und Temperaturen es zu einem Zusammenpressen und Sintern des Pulvers kommt. Die Verbindung der Oberflächenbereiche kann eine rein formschlüssige (mikroskopisch formschlüssige) Verbindung oder auch eine durch Metalldiffusion entstehende Verbindung sein. Alternativ kann eine Lötverbindung vorgesehen sein. In einem solchen Fall kann beispielsweise zwischen der Plattierwerkstoff-Hülse und dem zu plattierenden Grundwerkstoff eine Lötfolie angeordnet werden, welche beim Erreichen der Zieltemperatur schmilzt.

## Patentansprüche

1. Verfahren zum Herstellen eines räumlichen Werkstoffverbunds aus wenigstens zwei Metallkörpern (4, 5; 10, 11), wobei zunächst die Metallkörper derart zusammengesetzt werden, dass zu verbindende Oberflächenbereiche lose aneinander anliegen, und dann dieser Verbund auf eine Zieltemperatur erwärmt wird und dabei diese Oberflächenbereiche spaltfrei aneinandergedrückt werden, wobei eine form- und/oder stoffschlüssige Verbindung zwischen den Oberflächenbereichen der Metallkörper hergestellt wird,
**dadurch gekennzeichnet,**
**dass** zum Erzeugen des zum Aneinanderdrücken der Oberflächenbereiche erforderlichen Druckes wenigstens ein Expansionshohlraum (2; 8) mit einem vorgegebenen Anfangsvolumen in einem der Metallkörper oder in einem zusätzlichen Expansionskörper (1; 7), der an wenigstens einem der Metallkörper (5; 11) anliegt, derart angeordnet wird, dass bei seiner Expansion die zu verbindenden Oberflächenbereiche gegeneinander gepresst werden,
**dass** eine vorgegebene Stoffmenge wenigstens eines Stoffes, der zumindest bei der Zieltemperatur gasförmig ist oder vor dem Erreichen der Zieltemperatur zumindest einen bei der Zieltemperatur gasförmigen Stoff in einem vorgegebenen Mengenanteil bildet, in den Expansionshohlraum (2; 8) gefüllt und hermetisch eingeschlossen wird, wobei die Innenwandung des Expansionshohlraums aus einem Material besteht, das den wenigstens einen gasförmigen Stoff nicht absorbieren und nicht mit diesem unter Änderung der Stoffmenge des wenigstens einen gasförmigen Stoffes reagieren kann,
wobei die vorgegebene Stoffmenge so gewählt wird, dass in dem Expansionshohlraum bei Erreichen der Zieltemperatur ein vorgegebener Druck erreicht wird, der über eine Deformation des den Expansionshohlraum enthaltenden Metallkörpers bzw. des Expansionskörpers und wenigstens eines der anliegenden Metallkörper zum Schließen vorhandener Spalte (6; 12) zwischen den zu verbindenden Oberflächenbereichen ausreicht.

2. Verfahren nach Anspruch 1, **dadurch gekennzeichnet, dass** eine vorgegebene Stoffmenge in den Expansionshohlraum gefüllt wird, indem ein gasförmiger Stoff bei einer vorgegebenen Einbringungstemperatur und einem vorgegebenen Einbringungsdruck oder eine vorgegebene Stoffmenge eines festen oder flüssigen Stoffs in den Expansionshohlraum eingebracht wird.

3. Verfahren nach Anspruch 2, **dadurch gekennzeichnet, dass** eine vorgegebene Stoffmenge einer Kohlenwasserstoffverbindung und/oder Wasser in den Expansionshohlraum eingebracht wird.

4. Verfahren nach einem der Ansprüche 1 - 3, **dadurch gekennzeichnet, dass** das Anfangsvolumen des Expansionshohlraums und die vorgegebene Stoffmenge auf die vorgesehene Ausdehnung des Expansionskörpers aufgrund des Schließens der Spalte und aufgrund der zulässigen maximalen Deformation der Metallkörper so abgestimmt werden, dass der Expansionsvorgang aufgrund abfallenden Druckes in dem expandierten Expansionshohlraum endet, bevor eine zulässige maximale Deformation wenigstens eines der Metallkörper überschritten werden kann, wobei das Anfangsvolumen so eingestellt wird, dass eine gewünschte Steilheit des Druckabfalls bei Erreichen der vorgesehenen Ausdehnung des Expansionskörpers erreicht wird.

5. Verfahren nach einem der Ansprüche 1 - 4, **dadurch gekennzeichnet, dass** die vorgegebene Stoffmenge so gewählt wird, dass in dem Expansionshohlraum spätestens bei Erreichen der Zieltemperatur ein vorgegebener Druck erreicht wird, der zum Herstellen einer formschlüssigen Verbindung zwischen den Oberflächenbereichen der Metallkörper ausreicht.

6. Verfahren nach Anspruch 5, **dadurch gekennzeichnet, dass** das Anfangsvolumen des Expansionshohlraums und die Stoffmenge zusätzlich so dimensioniert werden, dass die zu verbindenden Oberflächenbereiche mit einem derart hohen Druck aneinandergepresst werden, dass zwischen den zu verbindenden Oberflächenbereichen eine fest-diffusive metallische Verbindung ausgebildet wird, wenn die Zieltemperatur für eine vorgegebene Haltedauer gehalten oder ein zeitlicher Temperaturverlauf oberhalb der Zieltemperatur eingehalten wird.

7. Verfahren nach Anspruch 5 oder 6, **dadurch gekennzeichnet, dass** zunächst der Expansionshohlraum (8) eines Expansionskörpers (7) befüllt und verschlossen wird und dann
entweder auf den Expansionskörper wenigstens ein Metallkörper (11) in Form einer Hülse aus einem Plattierwerkstoff aufgeschoben wird und dann dieser Verbund in eine Bohrung oder Aufnahme passender Kontur eines innen zu plattierenden Metallkörpers (10) eingeschoben wird
oder der erste Metallkörper in eine Bohrung oder Aufnahme passender Kontur eines innen zu plattierenden zweiten Metallkörpers eingeschoben wird
oder in eine Bohrung oder Aufnahme passender Kontur des Expansionskörpers (1) wenigstens ein Metallkörper (5) in Form einer Hülse aus einem Plattierwerkstoff eingeschoben wird und dann in eine Bohrung wenigstens einer innersten Hülse dieses Verbunds ein außen zu plattierender Metallkörper (4) eingeschoben wird.

8. Verfahren nach einem der Ansprüche 5 -7, **dadurch gekennzeichnet, dass** die vorgegebene Stoffmenge so bemessen wird, dass nach dem Erreichen der Zieltemperatur und einem Halten des Werkstoffverbunds auf der Zieltemperatur sowie bei einem nachfolgenden Abkühlen auf eine geringere Temperatur noch ein derart hoher Druck aufrechterhalten bleibt, dass die dadurch erzeugten Spannungen die Warmkriechgrenzen der Werkstoffe zumindest des Expansionskörpers und der Metallkörper gegebenenfalls mit Ausnahme des von dem Expansionskörper am weitesten entfernt angeordneten Metallkörpers überschreiten.

9. Verfahren nach einem der Ansprüche 5 -8, **dadurch gekennzeichnet, dass** der den Expansionshohlraum enthaltende Metallkörper bzw. der Expansionskörper sowie die gegebenenfalls vorhandenen Metallkörper, die unmittelbar oder näher am Expansionsköper angeordnet sind, eine wesentlich geringere Warmzugfestigkeit als weiter vom Expansionshohlraum entfernt angeordnete Metallkörper, vorzugsweise nur einen Bruchteil der Warmzugfestigkeit der weiter entfernt angeordneten Metallkörper, haben.

10. Expansionskörper (1; 7) zur Verwendung in einem Verfahren nach einem der Ansprüche 1 - 9, wobei der Expansionskörper (1; 7) wenigstens einen Expansionshohlraum (2; 8) mit einem vorgegebenen Volumen aufweist, in dem eine vorgegebene Stoffmenge wenigstens eines Stoffes, der zumindest bei einer Zieltemperatur gasförmig ist oder vor dem Erreichen der Zieltemperatur zumindest einen gasförmigen Stoff in einem vorgegebenen Mengenanteil bildet, hermetisch eingeschlossen ist, wobei die Innenwandung des Expansionshohlraums (2; 8) aus einem Material besteht, das den wenigstens einen gasförmigen Stoff nicht absorbieren und nicht mit diesem unter Änderung der Menge des gasförmigen Stoffes reagieren kann, wobei die vorgegebene Stoffmenge so gewählt ist, dass in dem Expansionshohlraum (2; 8) bei Erreichen der Zieltemperatur ein vorgegebener Druck erreicht wird.

11. Expansionskörper nach Anspruch 10, **dadurch gekennzeichnet, dass** der hermetisch eingeschlossene wenigstens eine Stoff eine Kohlenwasserstoffverbindung und/oder Wasser umfasst und. dass zumindest das Material der Innenwandung des Expansionshohlraums (2; 8) Kupfer ist.

12. Anordnung zum Herstellen eines räumlichen Werkstoffverbunds aus wenigstens zwei Metallkörpern (4, 5; 10, 11), die an miteinander zu verbindenden Oberflächenbereichen im Ausgangszustand lose aneinander anliegen, wobei der zunächst noch lose Verbund zum Herstellen einer festen form- und/oder stoffschlüssigen Verbindung zwischen den Metallkörpern (4, 5; 10, 11) erwärmt und auf eine Zieltemperatur gebracht wird und dabei diese Oberflächenbereiche aneinandergedrückt werden,
wobei in einem der Metallkörper oder in einem zusätzlichen Expansionskörper (1; 7), der an wenigstens einem der Metallkörper (5; 11) anliegt, wenigstens ein Expansionshohlraum (2; 8) mit einem vorgegebenen Anfangsvolumen derart angeordnet ist, dass bei seiner Expansion die zu verbindenden Oberflächenbereiche ganzflächig gegeneinander gepresst werden,
wobei eine vorgegebene Stoffmenge wenigstens eines Stoffes, der zumindest bei der Zieltemperatur gasförmig ist oder vor dem Erreichen der Zieltemperatur zumindest einen gasförmigen Stoff in einem vorgegebenen Mengenanteil bildet, in dem Expansionshohlraum hermetisch eingeschlossen ist, wobei die Innenwandung des Expansionshohlraums aus einem Material besteht, das den wenigstens einen gasförmigen Stoff nicht absorbieren und nicht mit diesem unter Änderung der Menge des gasförmigen Stoffes reagieren kann,
wobei die vorgegebene Stoffmenge so gewählt ist, dass in dem Expansionshohlraum bei Erreichen der Zieltemperatur ein vorgegebener Druck erreicht wird, der über eine Deformation des den Expansionshohlraum enthaltenden Metallkörpers bzw. des Expansionskörpers (1; 7) und wenigstens eines der anliegenden Metallkörper (5; 11) zum Schließen vorhandener Spalte (6; 12) zwischen den zu verbindenden Oberflächenbereichen ausreicht.

13. Anordnung zum Herstellen eines räumlichen Werkstoffverbunds aus wenigstens zwei Metallkörpern (11, 10) nach Anspruch 12, **dadurch gekennzeichnet, dass** der Expansionshohlraum (8) von den zu verbindenden Oberflächenbereichen umschlossen wird.

14. Anordnung zum Herstellen eines räumlichen Werkstoffverbunds aus wenigstens zwei Metallkörpern nach Anspruch 13, **dadurch gekennzeichnet, dass** die Anordnung im Wesentlichen zylindrisch ist, so dass die zu verbindenden Oberflächenbereiche eine Mantelfläche der zylindrischen Anordnung bilden, und dass sich der Expansionshohlraum (2; 8) in axialer Richtung zwischen den Stirnseiten der zylindrischen Anordnung erstreckt.

15. Anordnung zum Herstellen eines räumlichen Werkstoffverbunds aus wenigstens zwei Metallkörpern nach einem der Ansprüche 12 - 14, **dadurch gekennzeichnet, dass** der den Expansionshohlraum (2; 8) enthaltende Metallkörper bzw. der Expansionskörper (1; 7) sowie die gegebenenfalls vorhandenen Metallkörper (5; 11), die unmittelbar oder näher am Expansionsköper (1; 7) angeordnet sind, eine wesentlich geringere Warmzugfestigkeit als weiter vom Expansionshohlraum entfernt angeordnete Metallkörper (4; 10), vorzugsweise nur einen Bruchteil der Warmzugfestigkeit der weiter entfernt angeordneten Metallkörper, haben.

16. Anordnung zum Herstellen eines räumlichen Werkstoffverbunds aus wenigstens zwei Metallkörpern nach Anspruch 15, **dadurch gekennzeichnet, dass** die Metallkörper (5; 11) mit der geringeren Warmzugfestigkeit aus Kupfer oder einer Kupferlegierung bestehen und dass die Metallkörper (4; 10) mit der höheren Warmzugfestigkeit aus einem Stahl bestehen.

## Claims

1. A method for producing a three-dimensional material composite of at least two metal bodies (4, 5; 10, 11), wherein the metal bodies are initially assembled such that the surface areas to be connected loosely abut on one another, wherein said composite is then heated to a target temperature while said surface areas are pressed against one another such that no gap remains, and wherein a positive-locking and/or force-locking connection is produced between the surface areas of the metal bodies,
**characterized in**
**that** the pressure required for pressing the surface areas against one another is generated by arranging at least one expansion cavity (2; 8) with a predefined initial volume in one of the metal bodies or in an additional expansion body (1; 7) which abuts on at least one of the metal bodies (5; 11), in such a way that during its expansion pressed against one another the surface areas to be connected are,
**that** a predefined amount of at least one substance is filled into the expansion cavity (2; 8) and hermetically confined, said substance being gaseous at least at the target temperature or forming, prior to reaching the target temperature, at least one substance in a predefined proportion that is gaseous at the target temperature, wherein the inner wall of the expansion cavity consists of a material that cannot absorb the at least one gaseous substance and cannot react therewith such that the amount of the at least one gaseous substance changes,
wherein the predefined amount of substance is chosen in such a way that a predefined pressure is reached in the expansion cavity upon reaching the target temperature, and wherein this predefined pressure suffices for closing any existing gaps (6; 12) between the surface areas to be connected due to a deformation of the metal body containing the expansion cavity or the expansion body, respectively, and at least one of the abutting metal bodies.

2. The method according to claim 1, **characterized in that** a predefined amount of substance is filled into the expansion cavity by introducing a gaseous substance with a predefined insertion temperature and a predefined insertion pressure or a predefined amount of a solid or liquid substance into the expansion cavity.

3. The method according to claim 2, **characterized in that** a predefined amount of a hydrocarbon compound and/or water is introduced into the expansion cavity.

4. The method according to one of claims 1-3, **characterized in that** the initial volume of the expansion cavity and the predefined amount of substance are matched to the intended expansion of the expansion body due to the closing of the gaps and due to the permissible maximum deformation of the metal bodies in such a way that the expansion process stops due to a pressure drop in the expanded expansion cavity before a permissible maximum deformation of at least one of the metal bodies can be exceeded, wherein the initial volume is adjusted such that a desired rate of the pressure drop is achieved upon reaching the intended expansion of the expansion body.

5. The method according to one of claims 1-4, **characterized in that** the predefined amount of substance is chosen in such a way that a predefined pressure is at the latest reached in the expansion cavity upon reaching the target temperature, wherein this predefined pressure suffices for producing a positive-locking connection between the surface areas of the metal bodies.

6. The method according to claim 5, **characterized in that** the initial volume of the expansion cavity and the amount of substance are furthermore dimensioned such that the surface areas to be connected are pressed against one another with such a high pressure that a solid-diffusive metallic connection is produced between the surface areas to be connected if the target temperature is maintained for a predefined holding time or a time-temperature profile above the target temperature is observed.

7. The method according to claim 5 or 6, **characterized in that** the expansion cavity (8) of an expansion body (7) is initially filled and sealed and then
either at least one metal body (11) in the form of a sleeve consisting of a plating material is pushed over the expansion body and this composite is subsequently inserted into a bore or receptacle of matching contour in a metal body (10) to be internally plated
or the first metal body is inserted into a bore or receptacle of matching contour in a second metal body to be internally plated
or at least one metal body (5) in the form of a sleeve consisting of a plating material is inserted into a bore or receptacle of matching contour in the expansion body (1) and a metal body (4) to be externally plated is subsequently inserted into a bore in at least an innermost sleeve of this composite.

8. The method according to one of claims 5-7, **characterized in that** the predefined amount of substance is dimensioned such that the pressure maintained after reaching the target temperature and holding the material composite at the target temperature, as well as subsequent cooling to a lower temperature, is still so high that the tensions generated thereby exceed the hot creep limits of the materials of at least the expansion body and the metal bodies, if applicable with the exception of the metal body arranged farthest from the expansion body.

9. The method according to one of claims 5-8, **characterized in that** the metal body containing the expansion cavity or the expansion body, respectively, as well as the metal bodies, if present, arranged directly on or near the expansion body, have a significantly lower hot tensile strength than metal bodies arranged farther from the expansion cavity, preferably only a fraction of the hot tensile strength of the metal bodies arranged farther from the expansion cavity.

10. An expansion body (1; 7) for use in a method according to one of claims 1-9, wherein the expansion body (1; 7) has an expansion cavity (2; 8) with a predefined volume, in which a predefined amount of at least one substance is hermetically confined, said substance being gaseous at least at a target temperature or forming, prior to reaching the target temperature, at least one gaseous substance in a predefined proportion, wherein the inner wall of the expansion cavity (2; 8) consists of a material that cannot absorb the at least one gaseous substance and cannot react therewith such that the amount of the at least one gaseous substance changes, and wherein the predefined amount of substance is chosen in such a way that a predefined pressure is reached in the expansion cavity (2; 8) upon reaching the target temperature.

11. The expansion body according to claim 10, **characterized in that** the at least one hermetically confined substance comprises a hydrocarbon compound and/or water, and **in that** at least the material of the inner wall of the expansion cavity (2; 8) is copper.

12. An arrangement for producing a three-dimensional material composite of at least two metal bodies (4, 5; 10, 11) that in the initial state loosely abut on one another in surface areas to be connected to one another, wherein the initially still lose composite is heated and brought to a target temperature while the surface areas are pressed against one another in order to produce a rigid positive-locking and/or force-locking connection between the metal bodies (4, 5; 10, 11),
wherein at least one expansion cavity (2; 8) with a predefined initial volume is arranged in one of the metal bodies or in an additional expansion body (1; 7), which abuts on at least one of the metal bodies (5; 11), in such a way that, during its expansion, the entire surface areas to be connected are pressed against one another,
wherein a predefined amount of at least one substance is hermetically confined in the expansion cavity, said substance being gaseous at least at the target temperature or forming, prior to reaching the target temperature, at least one gaseous substance in a predefined proportion, with the inner wall of the expansion cavity consisting of a material that cannot absorb the at least one gaseous substance and cannot react therewith such that the amount of the at least one gaseous substance changes, and
wherein the predefined amount of substance is chosen in such a way that a predefined pressure is reached in the expansion cavity upon reaching the target temperature, with this predefined pressure sufficing for closing any existing gaps (6; 12) between the surface areas to be connected due to a deformation of the metal body containing the expansion cavity or the expansion body (1; 7), respectively, and at least one of the abutting metal bodies (5; 11).

13. The arrangement for producing a three-dimensional material composite of at least two metal bodies (11, 10) according to claim 12, **characterized in that** the expansion cavity (8) is enclosed by the surface areas to be connected.

14. The arrangement for producing a three-dimensional material composite of at least two metal bodies according to claim 13, **characterized in that** the arrangement is essentially cylindrical such that the surface areas to be connected form a surface area of the cylindrical arrangement, and **in that** the expansion cavity (2; 8) extends in the axial direction between the end faces of the cylindrical arrangement.

15. The arrangement for producing a three-dimensional material composite of at least two metal bodies according to one of claims 12-14, **characterized in that** the metal body containing the expansion cavity (2; 8) or the expansion body (1; 7), respectively, as well as the metal bodies (5; 11) arranged directly on or near the expansion body (1; 7), if present, have a significantly lower hot tensile strength than metal bodies (4; 10) arranged farther from the expansion cavity, preferably only a fraction of the hot tensile strength of the metal bodies arranged farther from the expansion cavity.

16. The arrangement for producing a three-dimensional material composite of at least two metal bodies according to claim 15, **characterized in that** the metal bodies (5; 11) with the lower hot tensile strength consist of copper or a copper alloy, and **in that** the metal bodies (4; 10) with the higher hot tensile strength consist of steel.

## Revendications

1. Procédé de fabrication d'un matériau composite spatial composé d'au moins deux corps métalliques (4, 5 ; 10, 11), dans lequel les corps métalliques sont tout d'abord assemblés de telle sorte que les zones de surface à relier viennent reposer l'une sur l'autre de manière souple et ce composite est ensuite chauffé à une température cible et à cette fin ces zones de surface sont pressées l'une sur l'autre sans interstices, dans lequel une liaison par conjonction de forme et/de matières entre les zones de surface des corps métalliques est produite,
**caractérisé en ce que**
pour générer la pression nécessaire pour presser l'une sur l'autre les zones de surface, au moins un espace creux d'expansion (2 ; 8) avec un volume de départ prescrit est disposé dans un des corps métalliques ou dans un corps d'expansion supplémentaire (1 ; 7), qui vient reposer sur au moins un des corps métalliques (5 ; 11) de telle sorte que lors de son expansion les zones de surface à relier soient pressées l'une contre l'autre,
**en ce que** une quantité de matière prescrite d'au moins une matière, qui est au moins gazeuse à la température cible ou forme avant d'atteindre la température cible au moins une matière gazeuse à la température cible dans une fraction de matière prescrite, est remplie dans l'espace creux d'expansion (2 ; 8) et renfermée hermétiquement, dans lequel la paroi intérieure de l'espace creux d'expansion est constituée d'un matériau, qui ne peut pas absorber au moins une matière gazeuse et ne peut pas réagir avec cette dernière en cas de variation de la quantité de matière d'au moins une matière gazeuse,
dans lequel la quantité de matière prescrite est sélectionnée de telle sorte que dans l'espace creux d'expansion lorsque la température cible est atteinte une pression prescrite soit obtenue, qui en cas d'une déformation du corps métallique contenant l'espace creux d'expansion respectivement du corps d'expansion et d'au moins un des corps métalliques venant reposer suffit pour fermer les interstices présents (6 ; 12) entre les zones de surface à relier.

2. Procédé selon la revendication 1, **caractérisé en ce que** une quantité de matière prescrite est remplie dans l'espace creux d'expansion, en injectant une matière gazeuse à une température d'injection prescrite et à une pression d'injection prescrite ou une quantité de matière prescrite d'une matière solide ou liquide dans l'espace creux d'expansion.

3. Procédé selon la revendication 2, **caractérisé en ce que** une quantité de matière prescrite d'une liaison hydrocarbure et/ d'eau est injectée dans l'espace creux d'expansion.

4. Procédé selon une des revendications 1-3, **caractérisé en ce que** le volume de départ de l'espace d'expansion et la quantité de matière prescrite sont harmonisées sur la dilatation prescrite du corps d'expansion en raison de la fermeture des interstices et en raison de la déformation maximale autorisée du corps métallique, de telle sorte que le processus d'expansion prenne fin en raison d'une chute de pression dans l'espace creux d'expansion expansé, avant qu'une déformation maximale autorisée d'au moins un des corps métalliques puisse être dépassée, dans lequel le volume de départ est ajusté de telle sorte qu'une pente souhaitée de la chute de pression soit obtenue lorsque la dilatation prescrite du corps d'expansion est atteinte.

5. Procédé selon une des revendications 1-4, **caractérisé en ce que** la quantité de matière prescrite est sélectionnée de telle sorte que dans l'espace creux d'expansion au plus tard lorsque la température cible est atteinte une pression prescrite soit obtenue, qui suffit pour produire une liaison par conjonction de forme entre les zones de surface des corps métalliques.

6. Procédé selon la revendication 5, **caractérisée en ce que** le volume de départ de l'espace creux d'expansion et la quantité de matière sont en outre dimensionnées de telle sorte que les zones de surface à relier soient pressées l'une contre l'autre avec une température élevée de sorte que entre les zones de surface à relier une liaison mécanique fortement diffusive soit réalisée, quand la température cible est maintenue pour une durée de maintien prescrite ou une courbe de température temporelle est maintenue au-dessus de la température cible.

7. Procédé selon la revendication 5 ou 6, **caractérisé en ce que** tout d'abord l'espace creux d'expansion (8) d'un corps d'expansion (7) est rempli et fermé et ensuite
soit sur le corps d'expansion au moins un corps métallique (11) sous la forme d'un manchon constitué d'un matériau de placage est enfoncé et ce composite et ensuite inséré dans un alésage ou un contour adapté au réceptacle d'un corps métallique (10) à revêtir d'un placage à l'intérieur,
soit le premier corps métallique est inséré dans un alésage ou un contour adapté au réceptacle d'un deuxième corps métallique à revêtir d'un placage à l'intérieur,
soit dans un alésage ou un contour adapté au réceptacle du corps d'expansion (1) au moins un corps métallique (5) sous la forme d'un manchon constitué d'un matériau de placage est inséré et ensuite dans un alésage d'au moins un manchon interne de ce composite un corps métallique (4) à revêtir d'un placage à l'extérieur est inséré.

8. Procédé selon une des revendications 5-7, **caractérise en ce que** la quantité de matière prescrite est dimensionnée de telle sorte que après que la température cible a été atteinte et que le matériau composite a été maintenu à la température cible et en cas d'un refroidissement subséquent à une température plus basse, une telle pression élevée reste maintenue, de sorte que les tensions ainsi générées dépassent les limites de fluage à chaud du matériau d'au moins le corps d'expansion et le corps métallique le cas échéant, à l'exception du corps métallique disposé le plus loin du corps d'expansion.

9. Procédé selon une des revendications 5-8, **caractérisée en ce que** le corps métallique contenant l'espace creux d'expansion respectivement le corps d'expansion ainsi que les corps métalliques présents le cas échéant, qui sont disposées directement ou plus près sur le corps d'expansion, ont une résistance à la traction à chaud essentiellement plus petite que les corps métalliques disposés plus loin de l'espace creux d'expansion, de préférence ont seulement une fraction de la résistance à la traction à chaud des corps métalliques disposés le plus loin.

10. Corps d'expansion (1 ; 7) à utiliser dans un procédé selon une des revendications 1-9, dans lequel le corps d'expansion (1 ; 7) présente au moins un espace creux d'expansion (2 ; 8) avec un volume prescrit, dans lequel une quantité de matière prescrite d'au moins une matière, qui est gazeuse au moins à une température cible ou forme avant que la température cible soit atteinte au moins une matière gazeuse dans une fraction de matière prescrite, est renfermée hermétiquement, dans lequel la paroi intérieure de l'espace creux d'expansion (2 ; 8) est constitué d'une matière, qui ne peut pas absorber au moins une matière gazeuse et ne peut pas réagir avec celle-ci en cas de variations de la quantité de la matière gazeuse, dans lequel la quantité de matière prescrite est sélectionnée de telle sorte que dans l'espace creux d'expansion (2 ; 8) une pression prescrite soit atteinte lorsque la température cible est atteinte.

11. Corps d'expansion selon la revendication 10, **caractérisé en ce que** au moins une matière renfermée hermétiquement comprend une liaison d'hydrocarbure et/d'eau et **en ce que** au moins le matériau de la paroi intérieure de la chambre creuse d'expansion (2 ; 8) est du cuivre.

12. Dispositif de fabrication d'un matériau composite spatial constitué d'au moins deux corps métalliques (4, 5 ; 10, 11), qui sur les zones de surface à relier l'une à l'autre en l'état de départ viennent reposer l'un sur l'autre de manière souple, dans lequel le composite tout d'abord encore souple est réchauffé pour produire une liaison solide par conjonction de forme et/ou de matière entre les corps métalliques (4, 5 ; 10, 11) et est amené à une température cible et à cette fin ces zones de surface sont pressées l'une sur l'autre,
dans lequel dans un décor métallique ou dans un corps d'expansion supplémentaire (1 ; 7) qui vient reposer sur au moins un des corps métalliques (5 ; 11), au moins un espace creux d'expansion (2 ; 8) avec un volume de départ prescrit est disposé, de telle sorte que lors de son expansion les zones de surface à relier soient pressées l'une contre l'autre,
dans lequel une quantité de matière prescrite d'au moins une matière, qui est au moins gazeuse à la température cible ou forme avant d'atteindre la température cible au moins une matière gazeuse à la température cible dans une fraction de matière prescrite, est remplie dans l'espace creux d'expansion et renfermée hermétiquement, dans lequel la paroi intérieure de l'espace creux d'expansion est constituée d'un matériau, qui ne peut pas absorber au moins une matière gazeuse et ne peut pas réagir avec cette dernière en cas de variation de la quantité de matière d'au moins une matière gazeuse,
dans lequel la quantité de matière prescrite est sélectionnée de telle sorte que dans l'espace creux d'expansion lorsque la température cible est atteinte une pression prescrite soit obtenue, qui en cas d'une déformation du corps métallique contenant l'espace creux d'expansion respectivement du corps d'expansion (1 ; 7) et d'au moins un des corps métalliques venant reposer (5 ; 11) suffit pour fermer les interstices présents (6 ; 12) entre les zones de surface à relier.

13. Dispositif de fabrication d'un matériau composite spatial constitué d'au moins deux corps métalliques (11, 10) selon la revendication 12, **caractérisé en ce que** l'espace creux d'expansion (8) est enveloppé par les zones de surface à relier.

14. Dispositif de fabrication d'un matériau composite spatial constitué d'au moins deux corps métalliques selon la revendication 13, **caractérisé en ce que** le dispositif est essentiellement cylindrique, de telle sorte que les zones de surface à relier forment une surface de gaine du dispositif cylindrique et **en ce que** l'espace creux d'expansion (2 ; 8) s'étendent la direction axiale entre les côtés frontaux du dispositif cylindrique.

15. Dispositif de fabrication d'un matériau composite spatial constitué d'au moins deux corps métalliques selon une des revendications 12-14, **caractérise en ce que** le corps métallique contenant l'espace creux d'expansion (2 ; 8) respectivement le corps d'expansion (1 ; 7) ainsi que les corps métalliques présents le cas échéant (5 ; 11), qui sont disposés directement ou plus près du corps d'expansion (1 ; 7), ont une résistance à la traction à chaud essentiellement plus petite que les corps métalliques (4 ; 10) disposés plus loin de l'espace creux d'expansion, de préférence seulement une fraction de la résistance à la traction à chaud des corps métalliques disposés plus loin.

16. Dispositif de fabrication d'un matériau composite facial constitué d'au moins deux corps métalliques selon la revendication 15, **caractérisé en ce que** les corps métalliques (5 ; 11) avec la résistance à la traction à chaud la plus petite sont constitués de cuivre ou d'un alliage de cuivre et **en ce que** les corps métalliques (4 ; 10) avec la résistance à la traction sur la plus grande sont constitués d'un acier.
